# EUROPEAN PATENT APPLICATION

(11) **EP 4 738 366 A1**
(43) Date of publication of application: **06.05.2026**
(21) Application number: 25211965.6
(22) Date of filing: 29.10.2025
(51) Int. Cl.: G11C 17/12, H10B 20/00

(54) **READ-ONLY MEMORY WITH ONE-TRANSISTOR READ-ONLY MEMORY CELLS AND METHOD FOR WRITING READ-ONLY MEMORY CODE WITH BIT LINE LOAD OPTIMIZATION INTO READ-ONLY MEMORY**

(30) Priority: 01.11.2024 US 202463714867 P; 08.10.2025 US 202519352484
(71) Applicant: MEDIATEK INC., Hsinchu City 30078 (TW)
(72) Inventor: YANG, Tzu-Hsien, 30078 Hsinchu City (TW); CHIU, Yi-Te, 30078 Hsinchu City (TW)
(74) Representative: Pfenning, Meinig & Partner mbB

(57) **Abstract**

A read-only memory, ROM, (100) includes a first ROM cell (104), a second ROM cell (106), and a third ROM cell (102). The first ROM cell (104) is configured to store a first data value of a ROM code, and includes a first meta-oxide-semiconductor, MOS, transistor (114). The second ROM cell (106) is configured to store a second data value of the ROM code, and includes a second MOS transistor (116), wherein a source node of the second MOS transistor is electrically connected to a drain node of the first MOS transistor (114). The third ROM cell (102) is configured to store a third data value of the ROM code, and includes a third MOS transistor (112), wherein a drain node of the third MOS transistor (112) is electrically connected to a source node of the first MOS transistor (114).

## Description

### Field of the Invention

The present invention relates to a read-only memory (ROM) design, and more particularly, to a ROM with one-transistor (1T) ROM cells and a method for writing a ROM code with bit line (BL) load optimization into the ROM.

### Background of the Invention

A ROM is a non-volatile memory where data is fixed during the manufacturing process and is commonly used to store a boot-up code, BIOS firmware, and device driver programs in a system on a chip (SOC). However, as an SOC design becomes more complex, a larger ROM capacity is needed. Increasing the ROM storage capacity requires a larger die area, which increases the area and the power consumption of the SOC. The conventional ROM cell is formed by 1.5 transistors, where data is stored in a VD layer located in a source node of a metal-oxide-semiconductor (MOS) transistor and is isolated by an isolation device shared between two adjacent ROM cells. These dummy isolation devices in a conventional ROM waste die area and increase BL length, causing performance degradation and increased power consumption. Thus, there is a need for an innovative ROM design with no dummy isolation devices.

### Summary of the Invention

This in mind, the present invention aims at providing a ROM with 1T ROM cells and a method for writing a ROM code with BL load optimization into the ROM.

This is achieved by the ROM and the method according to independent claims. The dependent claims pertain to corresponding further developments and improvements.

As will be seen more clearly from the detailed description following below, the claimed ROM includes a first ROM cell, a second ROM cell, and a third ROM cell. The first ROM cell is configured to store a first data value of a ROM code, and includes a first MOS transistor having a gate node, a source node, and a drain node. The second ROM cell is configured to store a second data value of the ROM code, and includes a second MOS transistor having a gate node, a source node, and a drain node, wherein the source node of the second MOS transistor is electrically connected to the drain node of the first MOS transistor. The third ROM cell is configured to store a third data value of the ROM code, and includes a third MOS transistor having a gate node, a source node, and a drain node, wherein the drain node of the third MOS transistor is electrically connected to the source node of the first MOS transistor.

In addition, the claimed method includes: determining a VIA layer design of the ROM according to the ROM code, and writing the ROM code into the ROM by manufacturing vias of the ROM according to the VIA layer design of the ROM. The step of determining the VIA layer design of the ROM according to the ROM code includes: determining a VIA layer design of a second ROM cell according to a VIA layer design of a first ROM cell and a data value to be stored in the second ROM cell, wherein the first ROM cell and the second ROM cell are adjacent ROM cells.

### Brief Description of the Drawings

In the following, the invention is further illustrated by way of example, taking reference to the accompanying drawings. Thereof
FIG. 1 is a diagram illustrating a ROM with high density 1T ROM bit-cells according to an embodiment of the present invention,
FIG. 2 is a diagram illustrating an example of using the proposed 1T ROM cells to store data values,
FIG. 3 is a layout diagram of 1T ROM cells shown in FIG. 2 according to an embodiment of the present invention,
FIG. 4 is a diagram illustrating a 1T ROM cell code mapping scheme according to an embodiment of the present invention,
FIG. 5 is a diagram illustrating a post-CVR VIA layer design of a ROM code segment according to an embodiment of the present invention,
FIG. 6 is a diagram illustrating a comparison between bit line loads of the pre-CVR VIA layer design and the post-CVR VIA layer design of the same ROM code segment according to an embodiment of the present invention,
FIG. 7 is a diagram illustrating operations of a DDCO scheme for additional bit line load optimization according to an embodiment of the present invention,
FIG. 8 is a diagram illustrating a dummy cell insertion scheme according to an embodiment of the present invention,
FIG. 9 is a diagram illustrating an example of using the proposed dual-BL 1T ROM cells to store data values,
FIG. 10 is a layout diagram of dual-BL 1T ROM cells shown in FIG. 9 according to an embodiment of the present invention, and
FIG. 11 is a flowchart illustrating a method of accessing (reading/writing) a ROM code of a ROM with 1T ROM cells according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

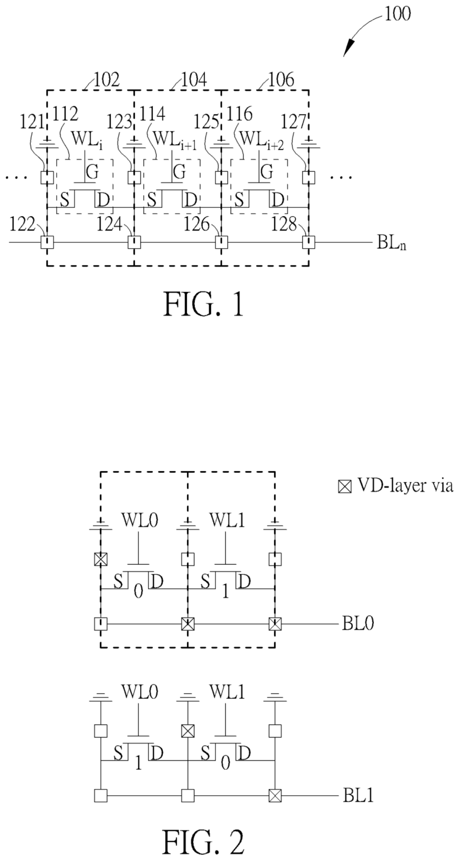

FIG. 1 is a diagram illustrating a ROM with high density 1T ROM bit-cells according to an embodiment of the present invention. The ROM 100 includes a plurality of 1T ROM bit-cells. For brevity and simplicity, only three contiguous 1T ROM cells 102, 104, and 106 are shown in FIG. 1. Each of the 1T ROM cells 102, 104, and 106 is a ROM bit-cell configured to store a data value (i.e., one bit) of a ROM code. The 1T ROM cell 102 includes a MOS transistor 112 having a gate node (labeled by "G"), a source node (labeled by "S"), and a drain node (labeled by "D"), where the gate node is electrically connected to a word line WLᵢ. The 1T ROM cell 104 includes a MOS transistor 114 having a gate node (labeled by "G"), a source node (labeled by "S"), and a drain node (labeled by "D"), where the gate node is electrically connected to a word line WLᵢ₊₁. The 1T ROM cell 106 includes a MOS transistor 116 having a gate node (labeled by "G"), a source node (labeled by "S"), and a drain node (labeled by "D"), where the gate node is electrically connected to a word line WLᵢ₊₂. Regarding the 1T ROM cell 104, the source node of the MOS transistor 114 is electrically connected to the drain node of the MOS transistor 112 of the adjacent 1T ROM cell 102, and the drain node of the MOS transistor 114 is electrically connected to the source node of the MOS transistor 116 of the adjacent 1T ROM cell 106. A VIA layer design of the 1T ROM cell 102 includes VIA settings 121, 122, 123, 124, where one VIA setting defines whether a VD-layer via is manufactured to provide a connection to a bit line BLₙ or a reference voltage (e.g., ground voltage GND). A VIA layer design of the 1T ROM cell 104 includes VIA settings 123, 124, 125, 126, where the same VIA settings 123 and 124 are shared between adjacent 1T ROM cells 102 and 104, and one VIA setting defines whether a VD-layer via is manufactured to provide a connection to the bit line BLₙ or the reference voltage (e.g., GND). A VIA layer design of the 1T ROM cell 106 includes VIA settings 125, 126, 127, 128, where the same VIA settings 125 and 126 are shared between adjacent 1T ROM cells 104 and 106, and one VIA setting defines whether a VD-layer via is manufactured to provide a connection to the bit line BLₙ or the reference voltage (e.g., GND). It should be noted that there is no isolation device between two adjacent 1T ROM cells. For example, as illustrated in FIG. 1, there are no isolation devices inserted into M (M ≥ 3) contiguous 1T ROM cells connected to different word lines. Hence, high density bit-cells of the ROM 100 can be realized by using the proposed 1T ROM cells.

Each of the 1T ROM cells 102, 104, 106 is configured to store a data value (i.e., one bit) of a ROM code, where the data value may be 0 or 1. In this embodiment, a data value stored in a 1T ROM cell can be set by a VIA layer design of the 1T ROM cell. Settings of the drain node and the source node for different data values are listed in the following table.

**Table 1**

| Data | ROM cell Drain | ROM cell Source |
|---|---|---|
| 0 | BL | GND |
| | GND | BL |
| 1 | BL | BL |
| | GND | GND |
| | Floating | X (Don't care) |
| | X (Don't care) | Floating |

Hence, when a data value of 0 is to be stored in a 1T ROM cell, a VIA layer design of the 1T ROM cell defines that one of the drain node and the source node is electrically connected to a BL through a VD-layer via, and the other of the drain node and the source node is electrically connected to GND through a VD-layer via. When a data value of 1 is to be stored in a 1T ROM cell, a VIA layer design of the 1T ROM cell defines that both of the drain node and the source node are electrically connected to a same node (e.g., BL or GND) through VD-layer vias, or one of the drain node and the source node is floating due to no VD-layer via manufactured to connect to BL/GND.

FIG. 2 is a diagram illustrating an example of using the proposed 1T ROM cells to store data values. When a word line WL0 and a bit line BL0 are selected, the bit line BL0 is discharged to GND through a turned-on MOS transistor, indicating that a data value read from a selected 1T ROM cell is 0. When a word line WL1 and the bit line BL0 are selected, the bit line BL0 is disconnected from GND due to a turned-off MOS transistor, indicating that a data value read from a selected 1T ROM cell is 1. When the word line WL0 and a bit line BL1 are selected, the bit line BL1 is disconnected from GND due to a turned-off MOS transistor, indicating that a data value read from a selected 1T ROM cell is 1. When the word line WL1 and the bit line BL1 are selected, the bit line BL1 is discharged to GND through a turned-on MOS transistor, indicating that a data value read from a selected 1T ROM cell is 0.

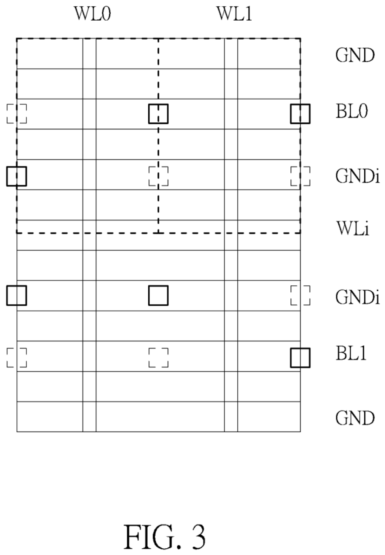

FIG. 3 is a layout diagram of 1T ROM cells shown in FIG. 2 according to an embodiment of the present invention. Compared to a conventional 1.5T ROM cell, the proposed 1T ROM cell can achieve 50% bit-cell area reduction and lower power consumption. In addition, a novel ROM with the proposed 1T ROM cells may utilize the same metal routing resources as a conventional ROM with 1.5T ROM cells.

During the manufacturing process, a ROM code is mapped to a VIA layer design of a ROM, and then the ROM code is written into the ROM by manufacturing VD-layer vias of the ROM according to the VIA layer design of the ROM. The VIA layer design of the ROM is determined according to the ROM code. In accordance with the 1T ROM cell code mapping scheme, a VIA layer design of a second 1T ROM cell of the ROM is determined according to a VIA layer design of a first 1T ROM cell of the ROM and a data value to be stored in the second 1T ROM cell, where the first 1T ROM cell and the second 1T ROM cell are adjacent ROM cells, and the same VIA setting is shared between a source node of a second MOS transistor of the second 1T ROM cell and a drain node of a first MOS transistor of the first 1T ROM cell.

In a first case where a VIA layer design of the first 1T ROM cell defines that the drain node of the first MOS transistor is electrically connected to a bit line through a VD-layer via and the data value to be stored in the second 1T ROM cell is a data value of 1, a VIA layer design of the second 1T ROM cell defines that the drain node of the second MOS transistor is electrically connected to the bit line through a VD-layer via.

In a second case where a VIA layer design of the first 1T ROM cell defines that the drain node of the first MOS transistor is electrically connected to a bit line through a VD-layer via and the data value to be stored in the second 1T ROM cell is a data value of 0, a VIA layer design of the second 1T ROM cell defines that the drain node of the second MOS transistor is electrically connected to a reference voltage (e.g., GND) through a VD-layer via.

In a third case where a VIA layer design of the first 1T ROM cell defines that the drain node of the first MOS transistor is electrically connected to a reference voltage (e.g., GND) and the data value to be stored in the second 1T ROM cell is a data value of 1, a VIA layer design of the second 1T ROM cell defines that the drain node of the second MOS transistor is electrically connected to the reference voltage (e.g., GND) through a VD-layer via.

In a fourth case where a VIA layer design of the first 1T ROM cell defines that the drain node of the first MOS transistor is electrically connected to a reference voltage (e.g., GND) through a VD-layer via and the data value to be stored in the second 1T ROM cell is a data value of 0, a VIA layer design of the second 1T ROM cell defines that the drain node of the second MOS transistor is electrically connected to a bit line through a VD-layer via.

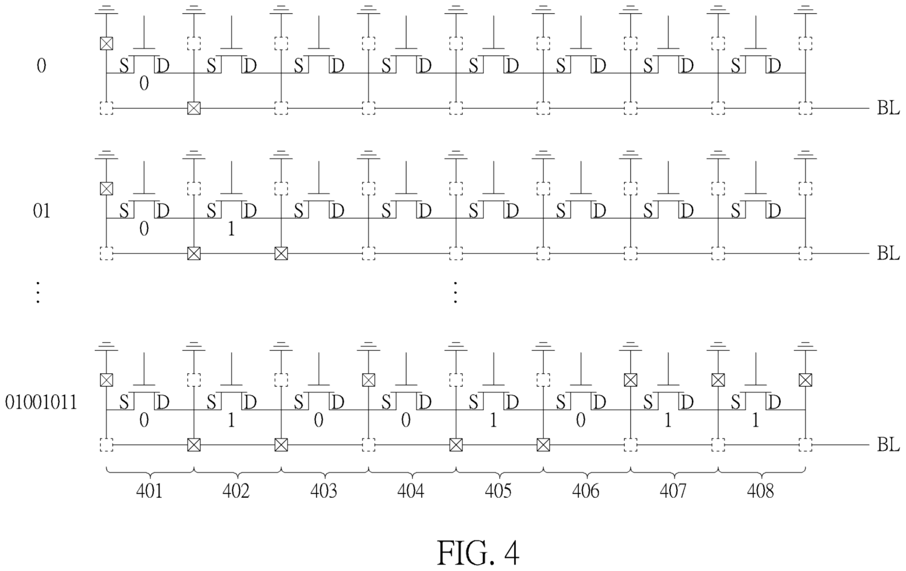

FIG. 4 is a diagram illustrating a 1T ROM cell code mapping scheme according to an embodiment of the present invention. A ROM code segment "01001011" is to be stored in contiguous 1T ROM cells 401-408. The VIA layer designs of contiguous 1T ROM cells 401-408 are determined one by one. Hence, the VIA layer design of the 1T ROM cell 402 (e.g., S=BL & D=BL) depends on the VIA layer design of the adjacent 1T ROM cell 401 (e.g., S=GND & D=BL) and a data value of 1 to be stored in the 1T ROM cell 402, the VIA layer design of the 1T ROM cell 403 (e.g., S=BL & D=GND) depends on the VIA layer design of the adjacent 1T ROM cell 402 (e.g., S=BL & D=BL) and a data value of 0 to be stored in the 1T ROM cell 403, the VIA layer design of the 1T ROM cell 404 (e.g., S=GND & D=BL) depends on the VIA layer design of the adjacent 1T ROM cell 403 (e.g., S=BL & D=GND) and a data value of 0 to be stored in the 1T ROM cell 404, and so on.

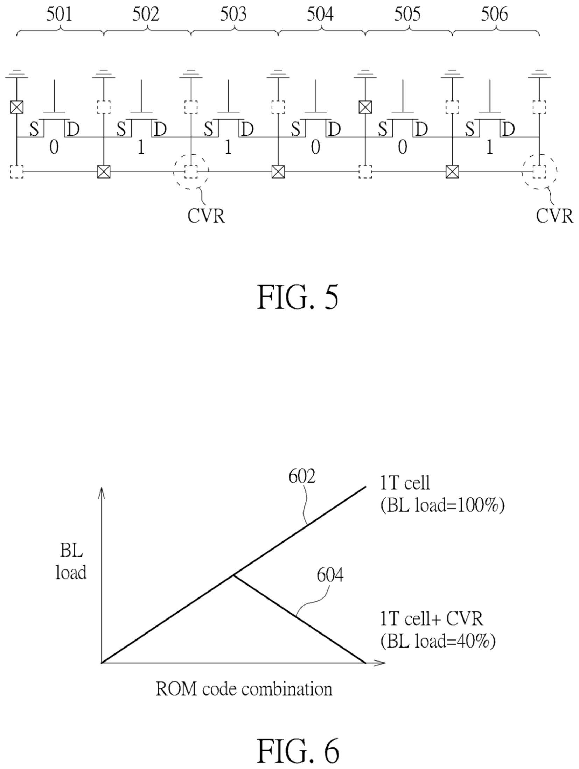

The VD-layer vias connected to the same bit line increase the load of the bit line, causing performance degradation and increased power consumption. As shown in the above table of settings of the drain node and the source node for different data values, a data value of 1 may be stored in one 1T ROM cell by having one of the drain node and the source node not connected to any of the reference voltage (e.g., GND) and the bit line. Based on such observation, the present invention proposes a continuous VIA remove (CVR) scheme to achieve bit line load optimization. Specifically, after VIA layer designs of contiguous 1T ROM cells are determined by the proposed 1T ROM cell code mapping scheme, the proposed CVR scheme can be enabled to change one or more VIA settings from an original setting to a new setting, where the original setting defines a bit line connection, and the new setting removes the bit line connection. FIG. 5 is a diagram illustrating a post-CVR VIA layer design of a ROM code segment "011001" according to an embodiment of the present invention. The CVR scheme checks pre-CVR VIA layer designs of contiguous 1T ROM cells 501-506 to determine if there are consecutive VIA settings with the same setting, where the same setting defines a bit line connection; and when a checking result indicates that there are consecutive VIA settings with the same setting, the CVR scheme changes at least one VIA setting of the consecutive VIA settings to a new setting, where the new setting removes the bit line connection, thus leading to a floating state of a source/drain node. A comparison between a pre-CVR VIA layer design and a post-CVR VIA layer design of the same ROM code segment "011001" is shown in the following table.

**Table 2**

| Code= 011001 | Edge | Bit 5 | Bit 4 | Bit 3 | Bit 2 | Bit 1 | Bit 0 | BL Load |
|---|---|---|---|---|---|---|---|---|
| 1T ROM cell | GND | BL | BL | BL | GND | BL | BL | 5 |
| CVR | GND | BL | Floating | BL | GND | BL | Floating | 3 |

The pre-CVR VIA layer design of the 1T ROM cell 501 has VIA settings S=GND and D=BL. The pre-CVR VIA layer design of the 1T ROM cell 502 has VIA settings S=BL and D=BL. The pre-CVR VIA layer design of the 1T ROM cell 503 has VIA settings S=BL and D=BL. The pre-CVR VIA layer design of the 1T ROM cell 504 has VIA settings S=BL and D=GND. The pre-CVR VIA layer design of the 1T ROM cell 505 has VIA settings S=GND and D=BL. The pre-CVR VIA layer design of the 1T ROM cell 506 has VIA settings S=BL and D=BL. Hence, there are three consecutive VIA settings S/D=BL and two consecutive VIA settings S/D=BL included in the pre-CVR VIA layer design of the ROM code segment "011001". In this embodiment, the CVR scheme changes a VIA setting D=BL of the 1T ROM cell 502 (which is also a VIA setting S=BL of the adjacent 1T ROM cell 503) to a new setting that makes a drain node of 1T ROM cell 502 (which is also a source node of the adjacent 1T ROM cell 503) floating, and changes a VIA setting D=BL of the 1T ROM cell 506 to a new setting that makes a drain node of 1T ROM cell 506 floating.

FIG. 6 is a diagram illustrating a comparison between bit line loads of the pre-CVR VIA layer design and the post-CVR VIA layer design of the same ROM code segment "011001" according to an embodiment of the present invention. The pre-CVR VIA layer design of the ROM code segment "011001" has 5 VIA settings S/D=BL, as illustrated by a characteristic curve 602. The post-CVR VIA layer design of the ROM code segment "011001" has 3 VIA settings S/D=BL, as illustrated by a characteristic curve 604. Hence, the CVR scheme can effectively reduce the bit line load without affecting writing of data values in 1T ROM cells.

When the CVR scheme changes more than one VIA setting of consecutive VIA settings S/D=BL to a new setting, a drain node and a source node of the same 1T ROM cell may become floating. Hence, when a CVR scheme is enabled for bit line load optimization, settings of the drain node and the source node for different data values are listed in the following table.

**Table 3**

| Data | ROM cell Drain | ROM cell Source |
|---|---|---|
| 0 | BL | GND |
| | GND | BL |
| 1 | BL | BL |
| | GND | GND |
| | Floating | X (Don't care) |
| | X (Don't care) | Floating |
| | Floating | Floating |

As shown in FIG. 5, the floating node(s) created by the proposed CVR scheme separate VIA settings of the ROM code segment "011001" into a plurality of VIA setting groups. In some embodiments of the present invention, additional scheme(s) may be enabled for additional bit line load optimization after the proposed CVR scheme is done. For example, the present invention proposes a data-dependent code optimization (DDCO) scheme that applies additional bit line load optimization for a post-CVR VIA layer design.

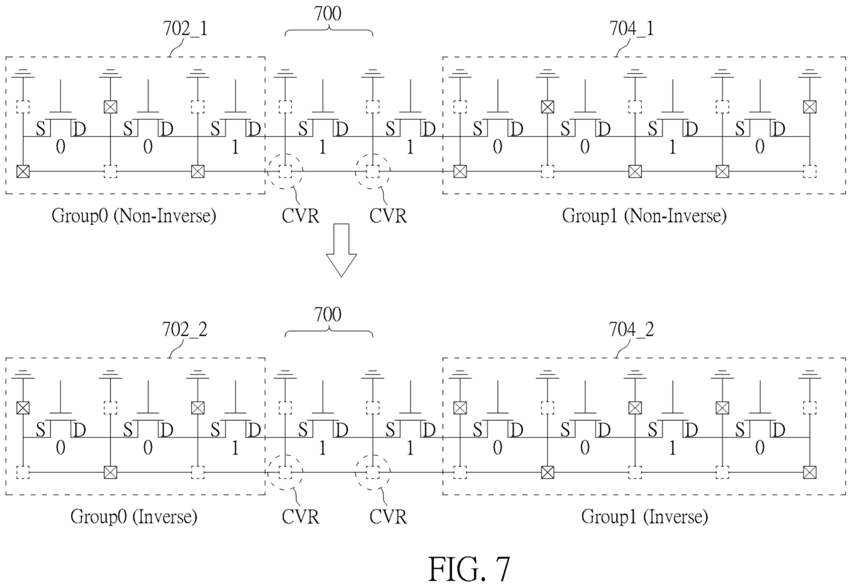

FIG. 7 is a diagram illustrating operations of a DDCO scheme for additional bit line load optimization according to an embodiment of the present invention. After the CVR scheme, the floating nodes created by the CVR scheme separate VIA settings of a post-CVR VIA layer design of a ROM code segment "001110010" into a plurality of VIA setting groups 702_1 and 704_1. In this embodiment, a source node and a drain node of a 1T ROM cell 700 are both floating due to VIA setting changes made by the CVR scheme. It should be noted that, with aid of the floating nodes, VIA setting groups 702_1 and 704_1 are independent of each other. Hence, each of the VIA setting groups 702_1 and 704_1 can select between an inverse type and a non-inverse type to optimize the bit line load. For example, the DDCO scheme may apply inversion to at least one of a plurality of VIA setting groups, where the inversion changes each VIA setting from one of a reference voltage connection (e.g., GND connection) and a bit line connection to the other of the reference voltage connection (e.g., GND connection) and the bit line connection. As shown in FIG. 7, the VIA setting group 702_1 with a non-inverse type has 2 VIA settings S/D=BL, the VIA setting group 702_2 with an inverse type has 1 VIA setting S/D=BL, the VIA setting group 704_1 with a non-inverse type has 3 VIA settings S/D=BL, and the VIA setting group 704_2 with an inverse type has 2 VIA setting S/D=BL. Hence, a post-DDCO VIA layer design of the ROM code segment "001110010" may adopt the VIA setting groups 702_2 and 704_2 for bit line load optimization. Specifically, a pre-DDCO VIA layer design (i.e., a post-CVR VIA layer design) of the ROM code segment "001110010" has 5 VIA settings S/D=BL. The post-DDCO VIA layer design of the ROM code segment "001110010" has 3 VIA settings S/D=BL, leading to extra bit line load reduction.

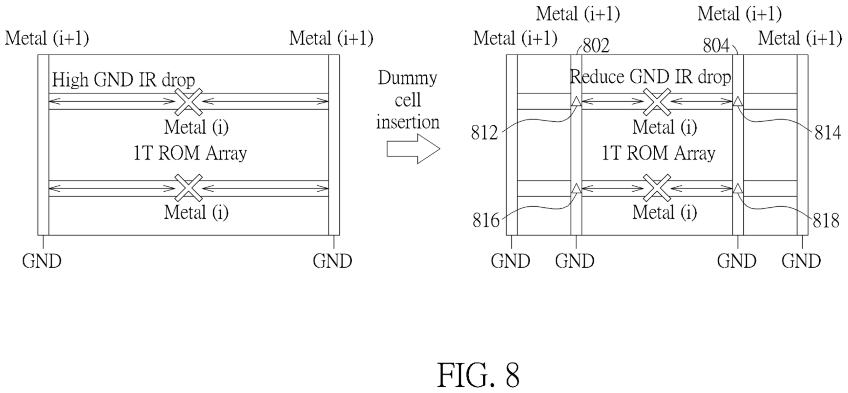

In accordance with the semiconductor process technology, the metal traces for delivering the reference voltage (e.g., GND) are routed on two sides of a layout design of a ROM, causing a higher GND IR drop. To address this GND IR drop issue, the present invention proposes adding dummy cells (which are not ROM cells used for storing data values of a ROM code) to a ROM for reducing the GND IR drop. FIG. 8 is a diagram illustrating a dummy cell insertion scheme according to an embodiment of the present invention. In this embodiment, two dummy cells 812 and 814 are inserted to 1T ROM cells located in a same column, where the 1T ROM cells are addressed by different word lines and the same bit line. In addition, two dummy cells 816 and 818 are inserted to 1T ROM cells located in a same column, where the 1T ROM cells are addressed by different word lines and the same bit line. Word lines may be routed on a metal layer (i). In this embodiment, additional metal traces 802 and 804 are routed on a metal layer (i+1) above the metal layer (i), where the metal trace 802 is routed above the dummy cells 812 and 816 located in a same row, and the metal trace 804 is routed above the dummy cells 814 and 818 located in a same row, where a reference voltage (e.g., GND) is delivered through the metal traces 802 and 804. As shown in FIG. 8, the GND IR drop can be reduced.

In some embodiments of the present invention, the added dummy cells 812, 814, 816, 818 (which are not ROM cells used for storing data values of a ROM code) may be used to serve as DDCO breakpoints. Like the floating nodes created by the proposed CVR scheme, the added dummy cells 812 and 814 can separate VIA settings of a ROM code segment into a plurality of VIA setting groups, and the dummy cells 816 and 818 can separate VIA settings of another ROM code segment into a plurality of VIA setting groups. The VIA setting groups are independent of each other, and the above-mentioned DDCO scheme can enable each of the VIA setting groups to select between an inverse type and a non-inverse type for optimizing the bit line load. For example, the DDCO scheme may apply inversion to at least one of a plurality of VIA setting groups separated by dummy cell(s), where the inversion changes each VIA setting from one of a reference voltage connection (e.g., GND connection) and a bit line connection to the other of the reference voltage connection (e.g., GND connection) and the bit line connection.

Regarding the ROM design shown in FIG. 1, a single-BL 1T ROM cell architecture is employed, such that a single-ended sense amplifier (SA) may be used in an input/output (I/O) circuit for reading a data value from a 1T ROM cell through a single bit line. However, this is for illustrative purposes only, and is not meant to be a limitation of the present invention. In some embodiments of the present invention, a ROM design may employ a dual-BL ROM cell architecture, such that a differential SA may be used in an I/O circuit for reading a data value from a ROM cell (e.g., a 1.5T ROM cell or a 1T ROM cell) through a pair of bit lines. By way of example, but not limitation, the ROM 100 shown in FIG. 1 may be modified for changing GND metal routing to another BL (e.g., BLBₙ) metal routing for better design flexibility. Hence, a VIA layer design of the 1T ROM cell 102 includes VIA settings 121, 122, 123, 124, where one VIA setting defines whether a VD-layer via is manufactured to provide a connection to one bit line BLₙ or the other bit line BLBₙ; a VIA layer design of the 1T ROM cell 104 includes VIA settings 123, 124, 125, 126, where one VIA setting defines whether a VD-layer via is manufactured to provide a connection to one bit line BLₙ or the other bit line BLBₙ; and a VIA layer design of the 1T ROM cell 106 includes VIA settings 125, 126, 127, 128, where one VIA setting defines whether a VD-layer via is manufactured to provide a connection to one bit line BLₙ or the other bit line BLBₙ.

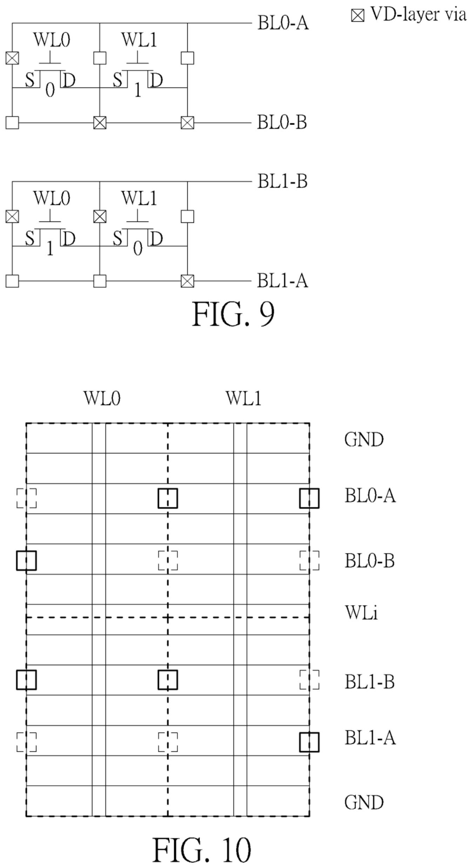

FIG. 9 is a diagram illustrating an example of using the proposed dual-BL 1T ROM cells to store data values. When a word line WL0 and a pair of bit lines BLO-A, BLO-B are selected, the bit lines BLO-A and BLO-B are connected through a turned-on MOS transistor, resulting in a zero voltage difference between BLO-A and BLO-B indicating that a data value read from a selected 1T ROM cell is 0. When a word line WL1 and the pair of bit lines BLO-A, BLO-B are selected, the bit line BLO-A is disconnected from the bit line BLO-B due to a turned-off MOS transistor, resulting in a large voltage difference between BLO-A and BLO-B indicating that a data value read from a selected 1T ROM cell is 1. When the word line WL0 and a pair of bit lines BL1-A, BL1-B are selected, the bit line BL1-A is disconnected from the bit line BL1-B due to a turned-off MOS transistor, resulting in a large voltage difference between BL1-A and BL1-B indicating that a data value read from a selected 1T ROM cell is 1. When the word line WL1 and the pair of bit lines BL1-A, BL1-B are selected, the bit lines BL1-A and BL1-B are connected through a turned-on MOS transistor, resulting in a zero voltage difference between BL1-A and BL1-B indicating that a data value read from a selected 1T ROM cell is 0.

FIG. 10 is a layout diagram of dual-BL 1T ROM cells shown in FIG. 9 according to an embodiment of the present invention. The layout diagram shown in FIG. 10 may be obtained by changing GND metal routing GNDᵢ of the layout diagram shown in FIG. 3 to another BL (e.g., BL0-B/BL1-B) metal routing.

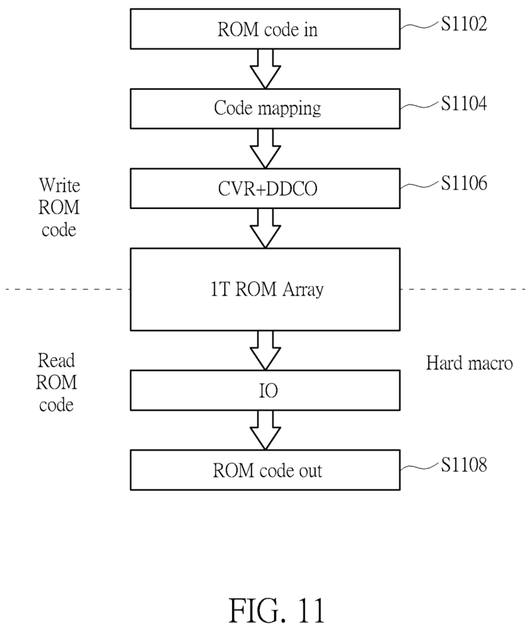

FIG. 11 is a flowchart illustrating a method of accessing (reading/writing) a ROM code of a ROM with 1T ROM cells according to an embodiment of the present invention. In step S1102, a ROM code to be stored into a ROM with 1T ROM cells is received. In step S1104, the proposed 1T ROM cell code mapping scheme is used to determine a VIA layer design of the ROM with 1T ROM cells according to the ROM code. In step S1106, the proposed CVR scheme and/or the proposed DDCO scheme can be used to fine tune the VIA layer design of the ROM with 1T ROM cells for bit line load optimization, thereby boosting power, performance, and area (PPA). Next, the ROM code is written into the ROM with 1T ROM cells by manufacturing VD-layer vias of the ROM according to the VIA layer design of the ROM. To access the stored data, the ROM data is read inside the hard macro, and then read out to an SOC for further processing (step S1108).

## Claims

1. A read-only memory, ROM, (100) **characterized by**:
a first ROM cell (104), configured to store a first data value of a ROM code, wherein the first ROM cell (104) comprises:
a first meta-oxide-semiconductor, MOS, transistor (114), having a gate node, a source node, and a drain node;
a second ROM cell (106), configured to store a second data value of the ROM code, wherein the second ROM cell (106) comprises:
a second MOS transistor (116), having a gate node, a source node, and a drain node, wherein the source node of the second MOS transistor (116) is electrically connected to the drain node of the first MOS transistor (114); and
a third ROM cell (102), configured to store a third data value of the ROM code, wherein the third ROM cell (102) comprises:
a third MOS transistor (112), having a gate node, a source node, and a drain node, wherein the drain node of the third MOS transistor (112) is electrically connected to the source node of the first MOS transistor (114).

2. The ROM (100) of claim 1, **characterized in that** the first data value is a data value of 0, the source node of the first MOS transistor (114) is electrically connected to a reference voltage, and the drain node of the first MOS transistor (114) is electrically connected to a bit line; or wherein the first data value is a data value of 0, the drain node of the first MOS transistor (114) is electrically connected to a reference voltage, and the source node of the first MOS transistor (114) is electrically connected to a bit line.

3. The ROM (100) of any one of claims 1 or 2, **characterized in that** the first data value is a data value of 1, both of the source node and the drain node of the first MOS transistor (114) are electrically connected to a bit line; or
the first data value is a data value of 1, both of the source node and the drain node of the first MOS transistor (114) are electrically connected to a reference voltage; or
the first data value is a data value of 1, one of the source node and the drain node of the first MOS transistor (114) is floating; or
the first data value is a data value of 1, both of the source node and the drain node of the first MOS transistor (114) are floating.

4. The ROM (100) of any one of claims 1 to 3, **characterized in that** the ROM (100) further comprises:
a plurality of dummy cells (812, 814, 816, 818), wherein a metal trace (802, 804) is routed above the plurality of dummy cells (812, 814, 816, 818), and a reference voltage is delivered through the metal trace.

5. The ROM (100) of any one of claims 1 to 4, **characterized in that** the ROM (100) further comprises:
a first bit line (BLO-A, BL1-A); and
a second bit line (BLO-B, BL1-B);
wherein the drain node of the first MOS transistor is electrically connected to one of the first bit line (BLO-A, BL1-A) and the second bit line (BLO-B, BL1-B), and the source node of the first MOS transistor is electrically connected to one of the first bit line (BLO-A, BL1-A) and the second bit line (BLO-B, BL1-B); and the first data value is read from the first ROM cell through the first bit line (BLO-A, BL1-A) and the second bit line (BLO-B, BL1-B).

6. The ROM (100) of claim 5, **characterized in that** the first data value is a data value of 0, the drain node is electrically connected to one of the first bit line (BLO-A, BL1-A) and the second bit line (BLO-B, BL1-B), and the source node is electrically connected to another of the first bit line (BLO-A, BL1-A) and the second bit line (BLO-B, BL1-B); or
the first data value is a data value of 1, both of the drain node and the source node are electrically connected to a same bit line of the first bit line (BLO-A, BL1-A) and the second bit line (BLO-B, BL1-B).

7. A method for writing a read-only memory, ROM, code into a ROM (100), **characterized by**:
determining a VIA layer design of the ROM (100) according to the ROM code, comprising:
determining a VIA layer design of a second ROM cell (106) according to a VIA layer design of a first ROM cell (104) and a data value to be stored in the second ROM cell (106), wherein the ROM (100) has no isolation devices inserted into at least three contiguous ROM cells that are connected to different word lines, and the first ROM cell (104) and the second ROM cell (106) are adjacent ROM cells; and
writing the ROM code into the ROM (100) by manufacturing vias of the ROM (100) according to the VIA layer design of the ROM (100).

8. The method of claim 7, **characterized in that** the first ROM cell (104) comprises:
a first meta-oxide-semiconductor, MOS, transistor (114), having a gate node, a source node, and a drain node;
the second ROM cell (106) comprises:
a second MOS transistor (116), having a gate node, a source node, and a drain node;
wherein a same VIA setting is shared between the drain node of the first MOS transistor (114) and the source node of the second MOS transistor (116).

9. The method of any one of claims 7 or 8, **characterized in that** a VIA layer design of the first ROM cell (104) defines that the drain node of the first MOS transistor (114) is electrically connected to a bit line, the data value to be stored in the second ROM cell (106) is a data value of 1, and a VIA layer design of the second ROM cell (106) defines that the drain node of the second MOS transistor (116) is electrically connected to the bit line.

10. The method of any one of claims 7 to 9, **characterized in that** a VIA layer design of the first ROM cell (104) defines that the drain node of the first MOS transistor (114) is electrically connected to a bit line, the data value to be stored in the second ROM cell (106) is a data value of 0, and a VIA layer design of the second ROM cell (106) defines that the drain node of the second MOS transistor (116) is electrically connected to a reference voltage.

11. The method of any one of claims 7 to 10, **characterized in that** a VIA layer design of the first ROM cell (104) defines that the drain node of the first MOS transistor (114) is electrically connected to a reference voltage, the data value to be stored in the second ROM cell (106) is a data value of 1, and a VIA layer design of the second ROM cell (106) defines that the drain node of the second MOS transistor (116) is electrically connected to the reference voltage.

12. The method of any one of claims 7 to 11, **characterized in that** a VIA layer design of the first ROM cell (104) defines that the drain node of the first MOS transistor (114) is electrically connected to a reference voltage, the data value to be stored in the second ROM cell (106) is a data value of 0, and a VIA layer design of the second ROM cell (106) defines that the drain node of the second MOS transistor (116) is electrically connected to a bit line.

13. The method of any one of claims 7 to 12, **characterized in that** determining the VIA layer design of the ROM according to the ROM code further comprising:
checking VIA layer designs of contiguous ROM cells (501, 502, 503, 504, 505, 506) to determine if there are consecutive VIA settings with a same setting, wherein the same setting defines a bit line connection; and
in response to determining that there are the consecutive VIA settings with the same setting, changing at least one VIA setting of the consecutive VIA settings to a new setting, wherein the new setting removes the bit line connection.

14. The method of claim 13, **characterized in that** the consecutive VIA settings are separated into a plurality of VIA setting groups (702_1, 704_1) by the at least one VIA setting, and determining the VIA layer design of the ROM according to the ROM code further comprising: applying inversion to at least one of the plurality of VIA setting groups (702_1, 704_1), wherein the inversion changes each VIA setting from one of a reference voltage connection and the bit line connection to another of the reference voltage connection and the bit line connection.

15. The method of any one of claims 7 to 14, **characterized in that** a first group of contiguous ROM cells and a second group of contiguous ROM cells is separated by one dummy cell (812, 814), and determining the VIA layer design of the ROM according to the ROM code further comprises:
applying inversion to at least one of a first VIA setting group of the first group of contiguous ROM cells and a second VIA setting group of the second group of contiguous ROM cells, wherein the inversion changes each VIA setting from one of a reference voltage connection and a bit line connection to another of the reference voltage connection and the bit line connection.
